# EUROPÄISCHE PATENTANMELDUNG

(11) **EP 4 349 584 A2**
(43) Veröffentlichungstag der Anmeldung: **10.04.2024**
(21) Anmeldenummer: 23194425.7
(22) Anmeldetag: 31.08.2023
(51) Int. Cl.: B31F 1/28

(54) **ANORDNUNG ZUR HERSTELLUNG EINER EINSEITIG KASCHIERTEN WELLPAPPEBAHN**

(30) Priorität: 14.09.2022 DE 102022209598
(71) Anmelder: BHS Corrugated Maschinen- und Anlagenbau GmbH, 92729 Weiherhammer (DE)
(72) Erfinder: Schieder, Sebastian, 92637 Letzau (DE)
(74) Vertreter: Rau, Schneck & Hübner Patentanwälte Rechtsanwälte PartGmbB

(57) **Zusammenfassung**

Eine Anordnung zur Herstellung einer einseitig kaschierten Wellpappebahn umfasst eine erste Riffelwalze (6) und eine zweite Riffelwalze (8) zum Erzeugen einer Wellbahn (4). Sie weist außerdem eine Leimauftragseinrichtung (14) zum Auftragen von Leim auf Spitzen der Wellbahn (4) und eine Anpressbandvorrichtung (21) auf, die wiederum ein Anpressband (24) zum Anpressen einer Deckbahn (2) an die mit Leim versehenen Spitzen der an der ersten Riffelwalze (6) anliegenden Wellbahn (4) aufweist. Ferner hat die Anordnung eine Anpressband-Angreifvorrichtung (31) mit einer Anpressband-Angreifeinrichtung (35), die an dem Anpressband (24) bei einem Riffelwalzenwechsel zum Minimieren und/oder Ausschließen eines Hängens des Anpressbandes (24) zumindest benachbart zu der Anpressband-Angreifeinrichtung (35) nach unten angreift, und mindestens einer mit der Anpressband-Angreifeinrichtung (35) in Verbindung stehenden Verlagerungseinrichtung (32) zum Verlagern der Anpressband-Angreifeinrichtung (35) zwischen einer Anpressband-Angreifstellung und Ruhestellung.

## Beschreibung

Der Inhalt der deutschen Patentanmeldung DE 10 2022 209 598.7 wird durch Bezugnahme hierin aufgenommen.

Die Erfindung betrifft eine Anordnung zur Herstellung einer einseitig kaschierten, insbesondere endlosen, Wellpappebahn.

Aus dem Stand der Technik sind Anordnungen zur Herstellung einseitig kaschierter Wellpappebahnen bekannt. Bei einem Riffelwalzenwechsel treten häufig Probleme auf, die einen Stillstand der Anordnung verlängern. Insbesondere bei dem Anordnen einer neuen oberen Riffelwalze bzw. eines neuen gesamten Riffelwalzensatzes in der Anordnung zur Herstellung einer einseitig kaschierten Wellpappebahn kommt es immer wieder vor, dass das Anpressband stört.

Der Erfindung liegt die Aufgabe zugrunde, die Nachteile des Standes der Technik zu überwinden. Insbesondere soll eine Anordnung zur Herstellung einer einseitig kaschierten Wellpappebahn bereitgestellt werden, die einen besonders funktionssicheren und benutzerfreundlichen Riffelwalzenwechsel erlaubt. Der Riffelwalzenwechsel soll auch äußerst effizient bzw. schnell durchführbar sein.

Diese Aufgabe wird erfindungsgemäß durch die in dem unabhängigen Anspruch 1 angegebenen Merkmale gelöst. Der Kern der Erfindung liegt in einer Anpressband-Angreifvorrichtung, die in ihrer Anpressband-Angreifstellung imstande ist, bei einem Riffelwalzenwechsel zumindest benachbart zu der (aktiven) Anpressband-Angreifeinrichtung ein Hängen bzw. Durchhängen des Anpressbandes nach unten zu minimieren bzw. auszuschließen und so insbesondere für einen notwendigen (Montage)Raum zum Anordnen mindestens einer neuen ersten Riffelwalze bzw. eines neuen Riffelwalzensatzes in der Anordnung zur Herstellung einer einseitig kaschierten Wellpappebahn zu sorgen. Es ist zweckmäßig, wenn die Anpressband-Angreifeinrichtung in der Anpressband-Angreifstellung imstande ist, in einem Angriffsbereich das Anpressband nach oben zu drücken und/oder zu ziehen bzw. dort zu halten. Insbesondere ist die Anpressband-Angreifeinrichtung imstande, bei einem Anordnen mindestens einer neuen Riffelwalze an dem Anpressband, bevorzugt direkt, entsprechend anzugreifen. Sie ist bevorzugt in der Anpressband-Angreifstellung imstande, das Anpressband zu spannen.

Es ist zweckmäßig, wenn die Anpressband-Angreifvorrichtung imstande ist, zumindest teilweise, bevorzugt vollständig, automatisiert zu arbeiten. Dies erlaubt einen besonders einfachen und schnellen Riffelwalzenwechsel. Wartung, Reparatur und/oder Reinigung der Anordnung zur Herstellung einer einseitig kaschierten Wellpappebahn sind so vereinfacht. Die Anpressband-Angreifvorrichtung bzw. deren Verlagerungsweg/-strecke ist vorzugsweise in ihrem Winkel gegenüber einer Horizontalen einstellbar bzw. verstellbar, was zum Beispiel eine Anpassung an unterschiedliche Riffelwalzen erlaubt. Alternativ ist sie unbeweglich bzw. fix (angeordnet).

Die Anpressband-Angreifeinrichtung greift in der Anpressband-Angreifstellung bevorzugt über mindestens einen Breitenbereich, bevorzugt über die gesamte Breite, des Anpressbandes an diesem an. Sie ist beispielsweise zumindest in der Anpressband-Angreifstellung starr. Die Anpressband-Angreifeinrichtung ist bevorzugt länglich und erstreckt sich vorzugsweise gerade. Beispielsweise umfasst sie mindestens ein Anpressband-Angreifelement, wie eine Anpressband-Angreifstange, Anpressband-Angreifleiste, Anpressband-Angreifseil oder dergleichen. Das mindestens eine Anpressband-Angreifelement hat beispielsweise eine runde oder eckige, wie viereckige, Außenkontur. Günstigerweise ist die Verlagerung der Anpressband-Angreifeinrichtung geführt. Es ist zweckmäßig, wenn die Anpressband-Angreifeinrichtung stufenlos verlagerbar ist. Beispielsweise ist eine Länge eines Verlagerungswegs bzw. einer Verlagerungsstrecke beeinflussbar bzw. vorgebbar. Eine Angreifkraft der Anpressband-Angreifeinrichtung an dem Anpressband ist beispielsweise einstellbar bzw. vorgebbar. In der Ruhestellung ist die Anpressband-Angreifeinrichtung beabstandet zu dem Anpressband angeordnet.

Die Anpressband-Angreifeinrichtung und die mindestens eine Verlagerungseinrichtung stehen in direkter oder indirekter Verbindung miteinander. Beispielsweise liegt zwischen diesen eine starre oder gelenkige Verbindung vor. Es ist zweckmäßig, wenn die Anpressband-Angreifeinrichtung an jedem ihrer Enden mit einer Verlagerungseinrichtung in Verbindung steht.

Die mindestens eine Verlagerungseinrichtung umfasst beispielsweise einen Verlagerungsantrieb, der bevorzugt als Elektro-, Pneumatik und/oder Hydraulik-Verlagerungsantrieb ausgeführt ist. Die Anpressband-Angreifeinrichtung kann auch händisch bzw. manuell betätigbar sein. Die mindestens eine Verlagerungseinrichtung ist dann entsprechend ausgeführt.

Die Riffelwalzen sind vorzugsweise paarweise angeordnet. Sie bilden bevorzugt einen Riffelwalzensatz. Die Riffelwalzen sind in einer Riffelstellung drehbar bzw. drehantreibbar gelagert und bilden einen Riffelspalt zum Erzeugen der Wellbahn aus. Sie sind beispielsweise einzeln, bevorzugt gemeinsam, wechselbar. Es ist zweckmäßig, wenn die erste Riffelwalze eine obere Riffelwalze und die zweite Riffelwalze eine untere Riffelwalze bildet.

Die Anpressbandvorrichtung umfasst bevorzugt mindestens zwei Umlenkwalzen, um die das, günstigerweise endlose, Anpressband geführt ist. Das Anpressband hat vorzugsweise eine einheitliche Breite in dessen Breiten- bzw. Querrichtung. Es ist umfangsseitig antreibbar. Es besteht beispielsweise aus einem Metallmaterial. Alternativ ist das Anpressband zum Beispiel aus Kunststoff oder einem nachgiebigen Material, wie Gummi, hergestellt. Es ist zweckmäßig, wenn mindestens eine Umlenkwalze für eine Veränderung des Verlaufs des Anpressbandes in dessen Breitenrichtung verkippbar und/oder für eine Änderung der Spannung des Anpressbandes in ihrem Abstand zu der anderen Umlenkwalze verlagerbar ist.

Die Leimauftragseinrichtung weist beispielsweise eine Leimwanne und eine Leimauftragswalze zum Auftragen von Leim aus der Leimwanne auf die Wellbahn auf. Ferner hat die Leimauftragseinrichtung vorzugsweise mindestens eine der Leimauftragswalze zugeordnete Leimdosierwalze bzw. Leimabquetschwalze für einen dosierten Leimauftrag.

Weitere vorteilhafte Ausgestaltungen der Erfindung sind in den Unteransprächen angegeben.

Die Ausgestaltungen gemäß der Unteransprüche 2 und 3 führen zu einer besonders einfachen und funktionssicheren Anpressband-Angreifvorrichtung. Die mindestens eine Verlagerungseinrichtung ist beispielsweise als Zylinder-Kolben-Verlagerungseinrichtung, Spindel-Verlagerungseinrichtung oder dergleichen ausgeführt. Sie ist zum Beispiel teleskopierbar. Es ist von Vorteil, wenn die Anpressband-Angreifeinrichtung senkrecht zu ihrer Längserstreckung bzw. Längsachse verlagerbar ist. Sie ist vorzugsweise schräg oder senkrecht gegenüber einer Horizontalen verlagerbar.

Die Ausgestaltung gemäß dem Unteranspruch 4 erlaubt einen störungsfreien Betrieb der Anpressbandvorrichtung. Die Anpressbandvorrichtung kann so vergleichsweise einfach ausgeführt sein. Günstigerweise ist die Anpressband-Angreifvorrichtung vollständig außerhalb der Anpressbandvorrichtung angeordnet. Sie befindet sich bevorzugt vollständig außerhalb eines Raumes, der von dem Anpressband umschlossen bzw. räumlich begrenzt ist. Es ist zweckmäßig, wenn die Anpressband-Angreifvorrichtung zumindest teilweise, bevorzugt vollständig, unterhalb der Anpressbandvorrichtung, insbesondere unter einer benachbart angeordneten Umlenkwalze der Anpressbandvorrichtung, angeordnet ist, insbesondere wenn sich die Anpressband-Angreifeinrichtung in ihrer Ruhestellung befindet.

Die Anordnung gemäß dem Unteranspruch 5 ist besonders funktionssicher. Die Anpressband-Angreifeinrichtung greift insbesondere zwischen den Umlenkwalzen von unten außen an dem Anpressband an, also insbesondere in einem Bereich, wo normalerweise bei einem Riffelwalzenwechsel aufgrund der dann fehlenden ersten Riffelwalze der Untergurt des Anpressbandes nach unten hängt bzw. durchhängt. Sie greift so bevorzugt beabstandet zu einem Obergurt des Anpressbandes an. Ein vergleichsweise einfaches Verlagern des Untergurts von unten nach oben bzw. Halten des Untergurts oben ist dort möglich.

Die Ausgestaltung gemäß dem Unteranspruch 6 erlaubt wieder einen besonders einfachen Riffelwalzenwechsel. Eine Störung dabei zwischen der ersten Riffelwalze und der Anpressbandvorrichtung ist so minimierbar bzw. ausschließbar. Es ist zweckmäßig, wenn bei einem Riffelwalzenwechsel ein Wechsel der ersten und zweiten Riffelwalze gemeinsam erfolgt. Günsterweise umfasst die Anordnung zur Herstellung einer einseitig kaschierten Wellpappebahn eine entsprechende Hubeinrichtung zum Absenken zumindest der ersten Riffelwalze, bevorzugt der ersten und zweiten Riffelwalze, gegenüber einer aktiven Riffelstellung.

Auch die Ausgestaltung gemäß dem Unteranspruch 7 erlaubt einen störungsfreien Wechsel der ersten Riffelwalze, bevorzugt der ersten und zweiten Riffelwalze. Es ist zweckmäßig, wenn die Leimauftragseinrichtung in ihrer Gesamtheit entsprechend verlagerbar bzw. rückversetzbar ist. Günstigerweise hat die Anordnung zur Herstellung einer einseitig kaschierten Wellpappebahn eine entsprechende Führung- bzw. Verlagerungseinrichtung.

Die Ausgestaltung gemäß dem Unteranspruch 8 führt zu einer Anpressband-Angreifvorrichtung, die besonders funktionssicher ist. Bei einem Angreifen der Anpressband-Angreifeinrichtung an dem Anpressband von der Leimauftragseinrichtung aus liegen besonders vorteilhafte Angreif-Kräfteverhältnisse vor.

Der Winkel gemäß dem Unteranspruch 9, 12 bzw. 14 ist vorzugsweise verstellbar, wie manuell und/oder mittels Aktuator, der zum Beispiel als Elektro-, Pneumatik- und/oder Hydraulikaktuator ausgeführt ist.

Auch die Ausgestaltungen gemäß der Unteransprüche 11 und 13 führen zu günstigen Angreif-Kräfteverhältnissen bei einem Angreifen der Anpressband-Angreifeinrichtung an dem Anpressband von dem Anordnungsgestell aus.

Die Riffelwalzen-Wechselvorrichtung gemäß dem Unteranspruch 15 ergibt eine besonders benutzerfreundliche und effiziente Anordnung zur Herstellung einer einseitig kaschierten Wellpappebahn. Beispielsweise ist zumindest die erste Riffelwalze mit der Riffelwalzen-Wechselvorrichtung wechselbar. Bevorzugt sind die erste und zweite Riffelwalze gemeinsam mit der Riffelwalzen-Wechselvorrichtung wechselbar. Es ist zweckmäßig, wenn die Riffelwalzen-Wechselvorrichtung ein Riffelwalzenmagazin bzw. eine Riffelwalzenkassette aufweist, das/die zwischen einer Riffelwalzen-Betriebsposition, also Riffelstellung, und einer Riffelwalzen-Lagerposition, insbesondere geführt, verlagerbar und imstande ist, mindestens eine zu wechselnde Riffelwalze aufzunehmen. Die Riffelwalzen-Lagerposition kann sich innerhalb oder außerhalb der Anordnung zur Herstellung einer einseitig kaschierten Wellpappebahn befinden. Durch die Riffelwalzen-Wechselvorrichtung wird ein platzsparendes Vorhalten mindestens einer weiteren Riffelwalze gewährleistet. Ein schneller, standardisierter und daher leicht reproduzierbarer Austausch mindestens einer Riffelwalze ist gewährleistet. Die Rüstzeit ist besonders niedrig. Die Riffelwalzen-Wechselvorrichtung umfasst bevorzugt mindestens einen Wechselantrieb. Dieser kann manuell oder motorisch ausgeführt sein.

Nachfolgend werden unter Bezugnahme auf die beigefügte Zeichnung bevorzugte Ausführungsformen der Erfindung beispielhaft beschrieben. Dabei zeigen:
- Fig. 1: eine perspektivische Ansicht einer erfindungsgemäßen Anordnung zur Herstellung einer einseitig kaschierten Wellpappebahn,
- Fig. 2: eine Ansicht der in Fig. 1 dargestellten Anordnung zur Herstellung einer einseitig kaschierten Wellpappebahn von deren Leimauftragseinrichtung aus,
- Fig. 3: einen Schnitt durch die Anordnung zur Herstellung einer einseitig kaschierten Wellpappebahn entsprechend der in Fig. 2 gezeigten Schnittlinie III-III,
- Fig. 3A: eine vergrößerte Ansicht von Fig. 3, die schematisch eine erzeugte einseitig kaschierte Wellpappebahn zeigt,
- Fig. 4: eine perspektivische Ansicht einer Leimauftragseinrichtung der in Fig. 1 bis 3 dargestellten Anordnung zur Herstellung einer einseitig kaschierten Wellpappebahn, an welcher die Anpressband-Angreifvorrichtung angeordnet ist,
- Fig. 5: eine Seitenansicht von Fig. 4,
- Fig. 6: eine Fig. 4 entsprechende Ansicht, wobei sich die Anpressband-Angreifeinrichtung nun in ihrer Anpressband-Angreifstellung befindet,
- Fig. 7: eine Seitenansicht entsprechend Fig. 5, wobei sich die Anpressband-Angreifeinrichtung nun in ihrer Anpressband-Angreifstellung befindet,
- Fig. 8: eine Schnitt entsprechend Fig. 3, wobei sich die Anpressband-Angreifeinrichtung nun in ihrer Anpressband-Angreifstellung befindet,
- Fig. 9: eine perspektivische Ansicht, die bei der veranschaulichten Anordnung zur Herstellung einer einseitig kaschierten Wellpappebahn einen Riffelwalzenwechsel zeigt,
- Fig. 10: einen Schnitt entsprechend Fig. 3, der eine alternative zweite erfindungsgemäße Ausführungsform einer Anordnung zur Herstellung einer einseitig kaschierten Wellpappebahn zeigt,
- Fig. 11: eine Ansicht entsprechend Fig. 10, wobei sich die Anpressband-Anpresseinrichtung nun in ihrer Anpressband-Angreifstellung befindet,
- Fig. 12: eine Ansicht entsprechend Fig. 11, wobei der Klarheit halber die Leimauftragseinrichtung nicht mit dargestellt ist, und
- Fig. 13: einen Schnitt entsprechend Fig. 3, der eine alternative dritte erfindungsgemäße Ausführungsform einer Anordnung zur Herstellung einer einseitig kaschierten Wellpappebahn zeigt, wobei sich die Anpressband-Angreifeinrichtung in ihrer Anpressband-Angreifstellung befindet

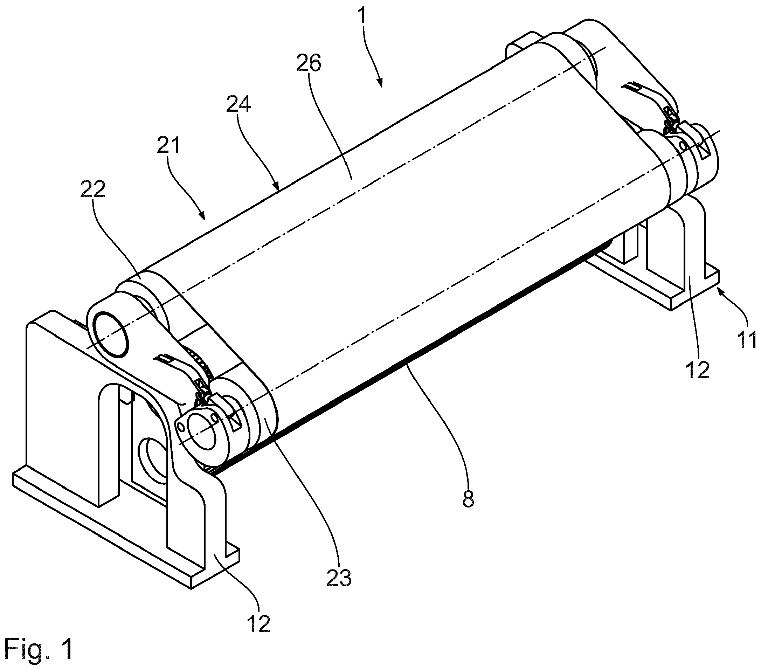

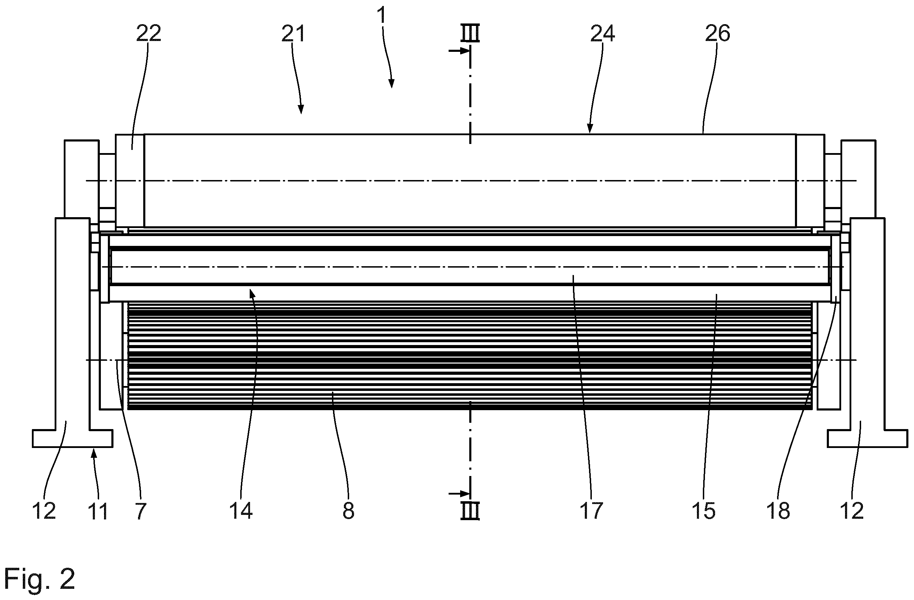

Einer in den Fig. 1 bis 3, 8, 9 in der Gesamtheit dargestellten Anordnung 1 zur Herstellung einer einseitig kaschierten Wellpappebahn, die Bestandteil einer Wellpappeanlage (nicht dargestellt) ist, werden von einer Deckbahn-Abrollvorrichtung (nicht dargestellt) der Wellpappeanlage eine, insbesondere endlose, Deckbahn 2 und von einer Materialbahn-Abrollvorrichtung (nicht dargestellt) der Wellpappeanlage eine, insbesondere endlose, Materialbahn 3 zugeführt.

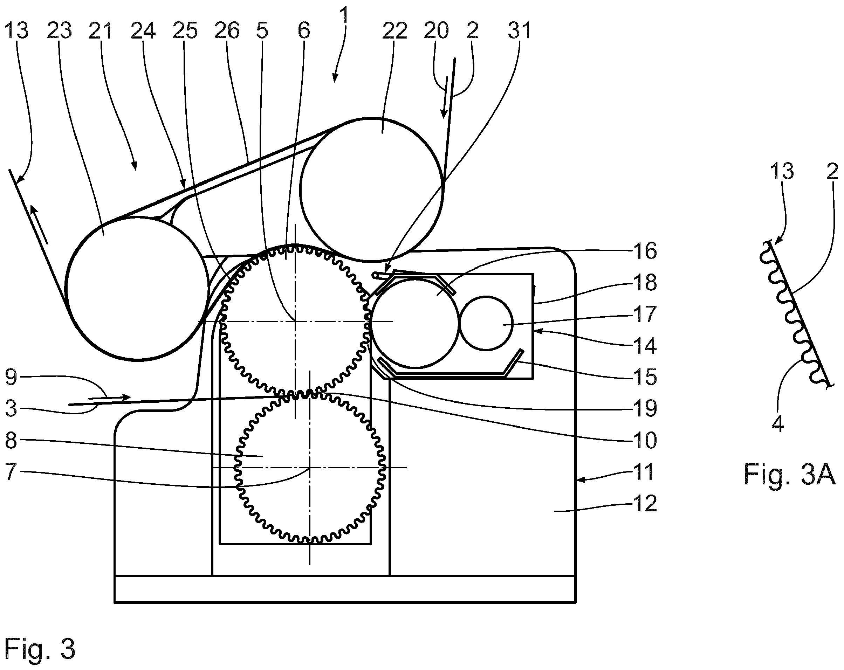

Die Anordnung 1 zur Herstellung einer einseitig kaschierten Wellpappebahn umfasst zum Erzeugen einer eine Wellung aufweisenden Wellbahn 4 (Fig. 3A) aus der Materialbahn 3 eine um eine erste Drehachse 5 drehbar gelagerte erste bzw. obere Riffelwalze 6 und eine um eine zweite Drehachse 7 drehbar gelagerte zweite bzw. untere Riffelwalze 8. Die Drehachsen 5, 7 verlaufen parallel zueinander und bevorzugt horizontal. Sie erstrecken sich senkrecht zu einer Transportrichtung 9 der Materialbahn 3 bzw. Wellbahn 4. Die Riffelwalzen 6, 8 bilden zum Durchführen und Riffeln der Materialbahn 3 einen Walzenspalt bzw. Riffelspalt 10 aus.

Die Anordnung 1 zur Herstellung einer einseitig kaschierten Wellpappebahn umfasst ein fixes Gestell 11. Das Gestell 11 weist dazu zwei separate Ständer 12 auf, die sich gegenüber einem Boden, wie Hallenboden, abstützen.

Die beiden Riffelwalzen 6, 8 sind gemeinsam vertikal verlagerbar. Dazu hat die Anordnung 1 zur Herstellung einer einseitig kaschierten Wellpappebahn eine Hubeinrichtung.

Zum Verbinden der Wellbahn 4 mit der Deckbahn 2 zu einer einseitig kaschierten Wellpappebahn 13 weist die Anordnung 1 zur Herstellung einer einseitig kaschierten Wellpappebahn eine Leimauftragseinrichtung 14 stromabwärts zu dem Walzenspalt 10 bezüglich der Materialbahn 3 bzw. Wellbahn 4 auf. Die Leimauftragseinrichtung 14 wiederum hat eine Leimwanne 15, eine in der Leimwanne 15 teilweise angeordnete Leimauftragswalze 16 und eine der Leimauftragswalze 16 zugeordnete Leimdosierwalze 17. Die Leimauftragswalze 16 ist zwischen der ersten Riffelwalze 6 und der Leimdosierwalze 17 angeordnet. Die Leimauftragswalze 16 und die Leimdosierwalze 17 sind in einem Leimauftragseinrichtungs-Gehäuse 18 der Leimauftragseinrichtung 14 drehbar gelagert. Alternativ sind sie beispielsweise in Seitenwänden der Leimwanne 15 drehbar gelagert. Ihre Drehachsen verlaufen parallel zueinander und parallel zu den Drehachsen 5, 7 der Riffelwalzen 6, 8.

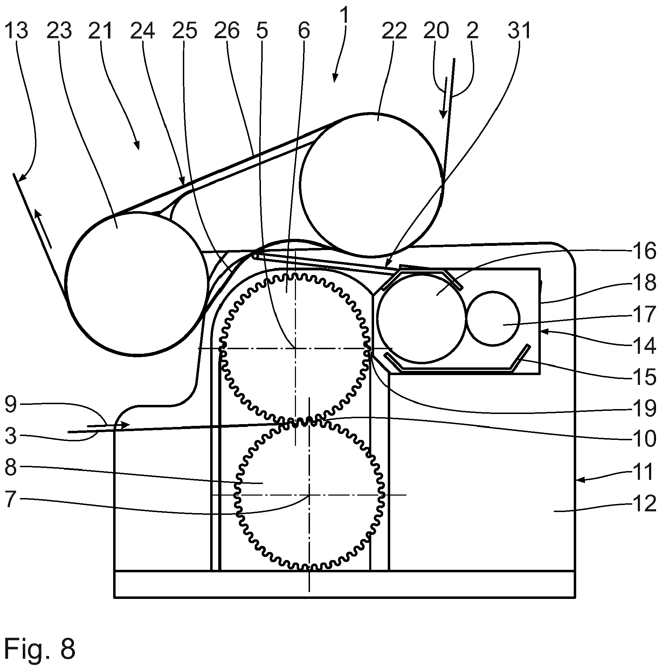

Die Leimauftragseinrichtung 14 ist in ihrer Gesamtheit senkrecht zu der ersten Riffelwalze 6 horizontal zwischen einer aktiven Leimauftragsstellung (Fig. 3) und einer inaktiven Riffelwalzen-Wechselstellung (Fig. 8) geführt verlagerbar.

Zum Durchführen und Beleimen der Wellbahn 4 bildet die Leimauftragswalze 16 in ihrer aktiven Leimauftragsstellung mit der ersten Riffelwalze 6 einen Spalt 19 aus, der so einen Leimspalt bzw. Beleimungsspalt bildet. Der sich in der Leimwanne 15 befindende Leim (nicht dargestellt) wird über die in diesen eingetauchte, rotierende Leimauftragswalze 16 auf freie Spitzen der Wellung der in der Transportrichtung 9 transportierten Wellbahn 4 aufgetragen. Die Leimdosierwalze 17 ist benachbart, aber beabstandet zu der Leimauftragswalze 16 angeordnet und dient zum Ausbilden einer gleichmäßigen Leimschicht auf der Leimauftragswalze 16. Es kann eine Spalt- und/oder Kraftregelung erfolgen. Bei der Kraftregelung liegt die Leimauftragswalze 16 immer (mit einer definierten Kraft) an der Wellbahn 4 an. Bei der Spaltregelung dient ein zwischen der Leimdosierwalze 17 und Leimauftragswalze 16 vorliegender Spalt zur Einstellung eines Leimauftrags. Die Leimdosierwalze 17 ist dabei drehangetrieben. Die Leimauftragswalze 16 und die Leimdosierwalze 17 sind durch mindestens einen Antriebsriemen drehangetrieben.

Die mit Leim versehene Wellbahn 4 wird anschließend in der Anordnung 1 zur Herstellung einer einseitig kaschierten Wellpappebahn mit der in einer Transportrichtung 20 transportierten Deckbahn 2 zusammengefügt, um die einseitig kaschierte Wellpappebahn 13 zu erhalten. Zum Anpressen der Deckbahn 2 gegen die mit Leim versehene Wellbahn 4, die oben bereichsweise an der ersten Riffelwalze 6 anliegt, hat die Anordnung 1 zur Herstellung einer einseitig kaschierten Wellpappebahn eine Anpressbandvorrichtung 21, die modulartig ausgeführt ist. Die Anpressbandvorrichtung 21 ist bezogen auf die Wellbahn 4 stromabwärts zu der Leimauftragseinrichtung 14 und dem Walzenspalt 10 sowie dem Spalt 19 angeordnet.

Die Anpressbandvorrichtung 21 hat eine erste Umlenkwalze 22 und eine zweite Umlenkwalze 23 sowie ein endloses Anpressband 24, das um die Umlenkwalzen 22, 23 in einer Umfangsrichtung herumgeführt ist. Das Anpressband 24 wird dabei durch die Umlenkwalzen 22, 23 umgelenkt. Die Umlenkwalzen 22, 23 sind drehantreibbar. Die zweite Umlenkwalze 23 ist beispielsweise in ihrem Abstand gleichmäßig zu der ersten Umlenkwalze 22 verlagerbar. Sie ist auch gegenüber der ersten Umlenkwalze 22 verkippbar. Die zweite Umlenkwalze 23 ist so als Bandspann- und Bandlauf-Regelwalze ausgeführt. Eine umgekehrte Ausgestaltung ist möglich. Die Drehachsen der Umlenkwalzen 22, 23 verlaufen in unverkipptem Zustand der zweiten Umlenkwalzen 23 parallel zueinander und zu den Drehachsen 5, 7.

Die erste Umlenkwalze 22 ist oberhalb der ersten Riffelwalze 6 bzw. der Leimauftragseinrichtung 14 angeordnet. Die zweite Umlenkwalze 23 ist im Wesentlichen seitlich neben der ersten Riffelwalze 6 angeordnet. Sie ist im Wesentlichen auf einer der Leimauftragseinrichtung 14 abgewandten Seite der ersten Riffelwalze 6 angeordnet.

Die erste Riffelwalze 6 greift bei dem Herstellen der einseitig kaschierten Wellpappebahn 13 in einen zwischen den Umlenkwalzen 22, 23 vorliegenden Raum von unten ein. Ein Untergurt 25 des Anpressbandes 24, der auch als Untertrum bzw. als unterer freier Abschnitt des Anpressbands 24 bezeichnet werden kann, wird dabei durch die erste Riffelwalze 6 umgelenkt und in Richtung auf einen gegenüberliegenden Obergurt 26 des Anpressbandes 24, der umgekehrt auch als Obergurt bzw. oberer freier Abschnitt des Anpressbands 24 bezeichnet werden kann, gedrückt. Der Untergurt 25 und Obergurt 26 sind (im Wesentlichen) einander gegenüberliegend angeordnet und erstrecken sich (vertikal) beabstandet zueinander. Sie haben gegensinnige Bewegungsrichtungen im Betrieb. Der Untergurt 25 drückt mit seiner Außenseite/Unterseite von außen bzw. oben auf die Deckbahn 2, die so wiederum von oben gegen die mit Leim versehene, dort an der ersten Riffelwalze 6 oben anliegende Wellbahn 4 gedrückt wird.

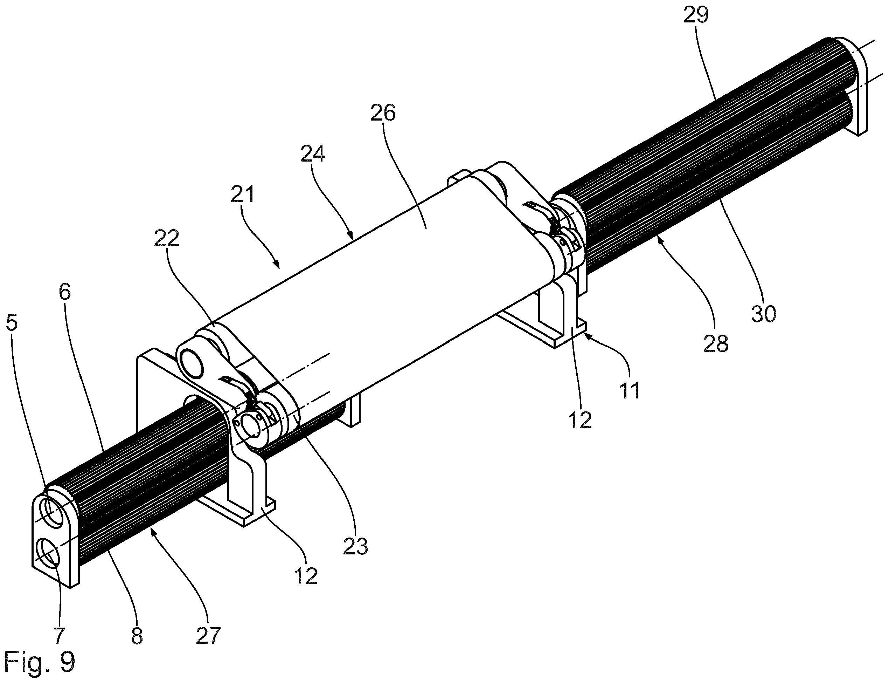

Die Riffelwalzen 6, 8 sind in einer Riffelwalzenkassette 27 (Fig. 9) angeordnet, die zwischen einer Riffelwalzen-Betriebsposition und einer seitlichen Riffelwalzen-Lagerposition verlagerbar, insbesondere verfahrbar, ist. In der Riffelwalzen-Betriebsposition befinden sich die Riffelwalzen 6, 8 in ihrer aktiven Riffelstellung. In der Riffelwalzen-Lagerstellung befinden sie sich beabstandet zu der aktiven Riffelstellung und außerhalb der Anordnung 1 zur Herstellung einer einseitig kaschierten Wellpappebahn. Die bislang im Einsatz befindliche Riffelwalzenkassette 27 samt Riffelwalzen 6, 8 ist so durch eine entsprechende neue Riffelwalzenkassette 28 austauschbar, die dazu entsprechend verlagerbar, insbesondere verfahrbar, ist. Die neue Riffelwalzenkassette 28 umfasst/trägt zwei entsprechend angeordnete neue Riffelwalzen 29, 30, die sich beispielsweise von den Riffelwalzen 6, 8 der bislang im Einsatz befindlichen Riffelwalzenkassette 27, insbesondere in Durchmesser und/oder Riffelung, unterscheiden. Die Riffelwalzen 6, 8, 29, 30 sind jeweils axial verlagerbar. In der neuen Riffelwalzenkassette 28 werden insbesondere die neuen Riffelwalzen 29, 30 bevorratet, die zum effizienten Betrieb der Anordnung 1 zur Herstellung einer einseitig kaschierten Wellpappebahn benötigt werden. Die Riffelwalzenkassetten 27, 28 und bevorzugt auch weitere Riffelwalzenkassetten sind günstigerweise in mindestens einem Riffelwalzenmagazin (nicht dargestellt) aufgenommen.

An der Leimauftragseinrichtung 14 ist eine Anpressband-Angreifvorrichtung 31 angeordnet. Die Anpressband-Angreifvorrichtung 31 umfasst zwei Verlagerungseinrichtungen 32, die bevorzugt konstruktiv identisch ausgeführt und paarweise angeordnet sind. Jede Verlagerungseinrichtung 32 hat einen Außenkörper 33, der seitlich außen an der Leimwanne 15, Leimwannen-Seitenwänden und/oder dem Leimauftragseinrichtungs-Gehäuse 18, beispielsweise fest oder verschwenkbar, angeordnet bzw. gelagert ist. Jeder Außenkörper 33 ist beispielsweise gehäuseartig ausgeführt. Die Leimwanne 15, Leimwannen-Seitenwände bzw. das Leimauftragseinrichtungs-Gehäuse 18 ist/sind zwischen den Verlagerungseinrichtungen 32 bzw. den Außenkörpern 33 angeordnet.

Jede Verlagerungseinrichtung 32 hat außerdem einen länglichen Verfahrkörper 34, der gegenüber dem zugehörigen Außenkörper 33, insbesondere durch diesen geführt, axial bzw. linear verfahrbar bzw. verlagerbar ist. Jeder Verfahrkörper 34 ist beispielsweise in den zugehörigen Außenkörper 33 einfahrbar und/oder aus diesem ausfahrbar. Er ist beispielsweise stangenartig. Die Verfahrkörper 34 sind aus der Seite des jeweiligen Außenkörpers 33 hinausgeführt, die benachbart zu der ersten Riffelwalze 6 angeordnet bzw. dieser zugewandt ist.

Die Anpressband-Angreifvorrichtung 31 umfasst außerdem eine Angreifstange 35, die vorzugsweise im Querschnitt kreisförmig ist und sich gerade erstreckt. Die Angreifstange 35 verläuft beispielsweise parallel zu der ersten Drehachse 5 bzw. senkrecht zu einer Umfangs- bzw. Umlaufrichtung des Anpressbandes 24. Sie erstreckt sich horizontal und ist an freien Enden der Verfahrkörper 34 angeordnet, die aus den Außenkörpern 33 hinausgeführt sind. Die Angreifstange 35 verläuft zwischen den Verfahrkörpern 34. Es ist zweckmäßig, wenn die Angreifstange 35 um ihre Längsachse drehbar bzw. drehantreibbar ist.

Es ist zweckmäßig, wenn die Anpressband-Angreifvorrichtung 31 in eine Betätigungseinheit, insbesondere Steuer- und/oder Regeleinheit, der Anordnung 1 zur Herstellung einer einseitig kaschierten Wellpappebahn bzw. der Wellpappeanlage einbindbar bzw. eingebunden ist.

Nachfolgend wird der Betrieb der Anordnung 1 zur Herstellung einer einseitig kaschierten Wellpappebahn näher erläutert.

Wie beispielsweise Fig. 3 zeigt, befinden sich bei Betrieb der Anordnung 1 zur Herstellung einer einseitig kaschierten Wellpappebahn die Riffelwalzen 6, 8 der gerade im Einsatz befindlichen Riffelwalzenkassette 27 bzw. des gerade im Einsatz befindlichen Riffelwalzensatzes in ihrer aktiven Riffelstellung und sind imstande, die Wellbahn 4 zu erzeugen.

Die Leimauftragseinrichtung 14 befindet sich in ihrer Gesamtheit in einer aktiven Leimauftragsstellung, so dass die Leimauftragswalze 16 imstande ist, dosiert Leim auf die Wellbahn 4 aufzutragen.

Der Untergurt 25 liegt oben im Bereich der ersten Riffelwalze 6 auf der transportierten Deckbahn 2 auf und drückt diese gegen die dort transportierte, beleimte Wellbahn 4 unter Bildung der einseitig kaschierten Wellpappebahn 13.

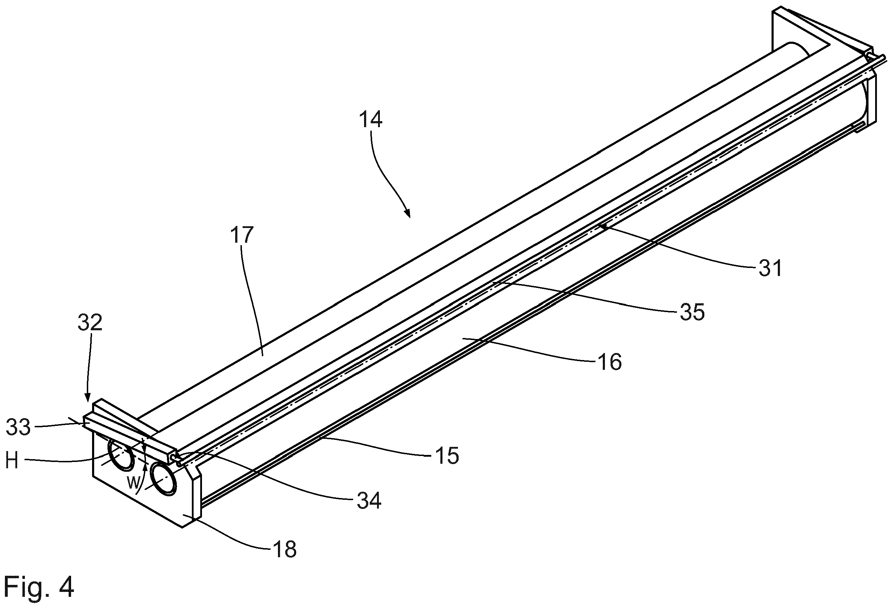

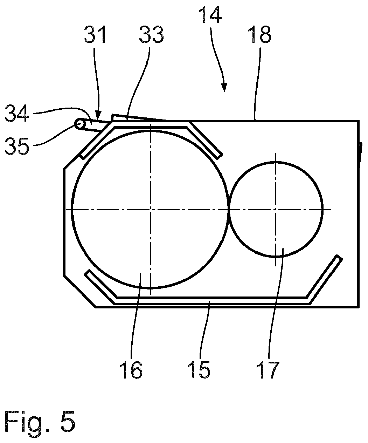

Die Anpressband-Angreifvorrichtung 31 befindet sich bei Herstellung der einseitig kaschierten Wellpappebahn 13 in ihrer Ruhestellung (siehe auch Fig. 4, 5). Die Angreifstange 35 ist unterhalb der ersten Umlenkwalze 22 und beabstandet zu dem Anpressband 24 unter diesem angeordnet. Sie ist (im Wesentlichen) seitlich neben der ersten Riffelwalze 6 und über der Leimauftragswalze 16 angeordnet. Die Verfahrkörper 34 sind in die Außenkörper 33, insbesondere vollständig, eingefahren.

Aus der einseitig kaschierten Wellpappebahn 13 ist eine beidseitig kaschierte Wellpappebahn in der Wellpappeanlage herstellbar.

Nachfolgend wird ein Austausch der bislang sich im Einsatz befindlichen Riffelwalzenkassette 27 durch die neue Riffelwalzenkassette bzw. den neuen Riffelwalzensatz 28 beschrieben. Bevorzugt befindet sich dabei die Anordnung 1 zur Herstellung einer einseitig kaschierten Wellpappebahn im Stillstand.

Zunächst wird das Anpressband 24 entspannt. Dafür wird die zweite Umlenkwalze 23 gleichmäßig in Richtung auf die erste Umlenkwalze 22 verlagert.

Die Leimauftragseinrichtung 14 wird horizontal aus der aktiven Leimauftragsstellung von der ersten Riffelwalze 6 senkrecht zu dieser weg in die inaktive Riffelwalzen-Wechselstellung verlagert. Dabei wird auch die Anpressband-Angreifvorrichtung 31 entsprechend mit verlagert. Anschließend wird die bisherige Riffelwalzenkassette 27 samt Riffelwalzen 6, 8 aus der Riffelstellung nach unten mittels der Hubeinrichtung in Richtung auf den Boden abgesenkt bzw. verlagert.

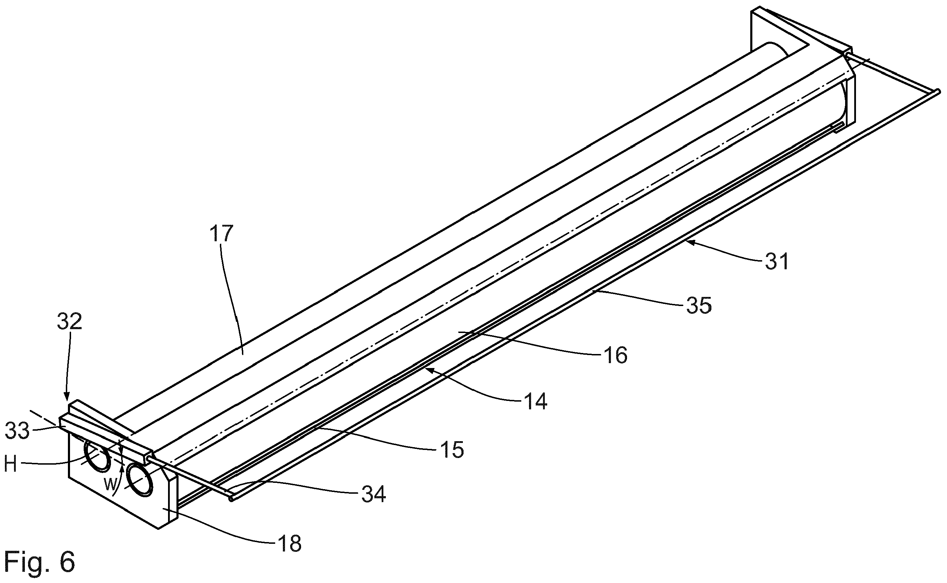

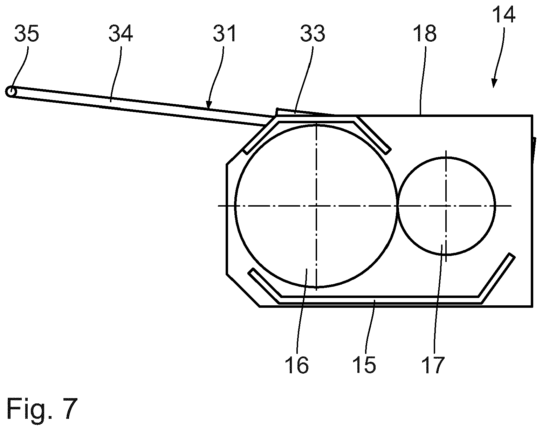

Nach dem Verlagern der Riffelwalzenkassette 27 samt Riffelwalzen 6, 8 und/oder dem Verlagern der Leimauftragseinrichtung 14 oder währenddessen werden die Verfahrkörper 34 gemeinsam gleichmäßig, beispielsweise vollständig, aus den Außenkörpern 33 linear ausgefahren, so dass die Angreifstange 35 von unten außen mit dem Untergurt 25 des Anpressbandes 24 zwischen den Umlenkwalzen 22, 23 in Anlage gelangt und so dort den Untergurt 25 nach oben in Richtung auf den Obergurt 26 drückt bzw. oben hält (siehe auch Fig. 6, 7, 8). Das Anpressband 24 kann dabei gespannt werden. Die Angreifstange 35 wird nach schräg oben über die erste Riffelwalze 6 verfahren. Sie wird unterhalb der ersten Umlenkwalze 22 verfahren. Die Angreifstange 35 ist imstande, sich beim Ausfahren bzw. Verfahren um ihre Längsachse zu drehen, wodurch eine Beschädigung des Anpressbandes 24 vermeidbar ist. Sie greift dann linienförmig über die gesamte Breite direkt unten an dem Anpressband 24 und senkrecht zu dessen Umlaufrichtung an. Sie verhindert dabei insbesondere, dass der Untergurt 25 zwischen den Umlenkwalzen 22, 23 nach unten herabhängt. Das Anpressband 24 steht dabei bevorzugt. Jeder Außenkörper 33 schließt beim Ausfahren der Angreifstange 35 gegenüber einer Horizontalen H einen, beispielsweise voreingestellten, Winkel w ein, der zwischen 2° und 20°, bevorzugt zwischen 4° und 10°, liegt. Es ist zweckmäßig, wenn der Winkel w, zum Beispiel manuell und/oder per separater Aktorik bzw. motorisch, verstellbar ist.

Anschließend wird die bislang aktive Riffelwalzenkassette 27 samt Riffelwalzen 6, 8 vollständig seitlich aus der Anordnung 1 zur Herstellung einer einseitig kaschierten Wellpappebahn herausgefahren (Fig. 9). Der Untergurt 25 ist dabei beabstandet zu der ersten Riffelwalze 6 gehalten. Die neue Riffelwalzenkassette 28 wird samt Riffelwalzen 29, 30 entsprechend von der anderen Seite seitlich in die Anordnung 1 zur Herstellung einer einseitig kaschierten Wellpappebahn eingefahren. Sie wird unter die Anpressbandvorrichtung 21 gefahren.

Die Angreifstange 35 wird wieder umgekehrt gleichmäßig eingefahren. Sie legt quasi das Anpressband 24 von oben auf die neue obere Riffelwalze 29 ab. Die neue obere Riffelwalze 29 und der Untergurt 25 nähern sich aneinander an.

Die neue Riffelwalzenkassette 28 wird samt Riffelwalzen 29, 30 in ihre aktive Riffelstellung nach oben verlagert.

Das Anpressband 24 wird danach gespannt. Dies erfolgt durch gleichmäßiges Verlagern der zweiten Umlenkwalze 23 weg von der ersten Umlenkwalze 22 und/oder die Verlagerung der neuen Riffelwalzenkassette 28 nach oben.

Die Leimauftragseinrichtung 14 wird wieder in ihre aktive Leimauftragsstellung in Richtung auf die neue obere Riffelwalze 29 verlagert. Dabei wird auch die Anpressband-Angreifvorrichtung 31 entsprechend mit verlagert. Die neue obere Riffelwalze 29 drückt in ihrer Riffelstellung den Untergurt 25 dann wieder nach oben in Richtung auf den Obergurt 26. Anschließend werden die Materialbahn 9 und die Deckbahn 2 wieder zugeführt. Die Wellpappeproduktion kann wieder beginnen.

Durch die Anpressband-Angreifvorrichtung 31 ist es möglich, die bislang im Einsatz befindliche Riffelwalzenkassette 27 samt Riffelwalzen 6, 8 auszufahren, ohne dass das Anpressband 24 im Bereich des Untergurts 25 zerstört bzw. beschädigt wird. Umgekehrt ist ein Einfahren der neuen Riffelwalzenkassette 28 samt Riffelwalzen 29, 30 möglich, ohne dass das Anpressband 24 im Bereich des Untergurts 25 stört bzw. beschädigt wird.

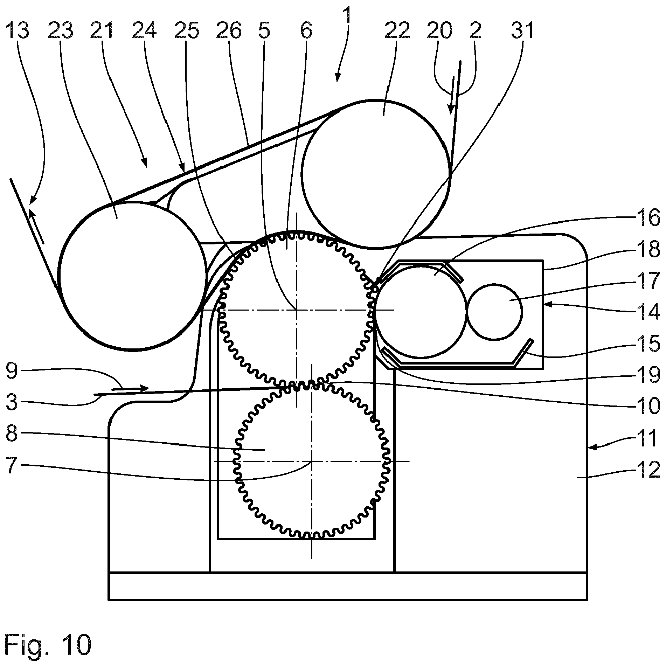

Nachfolgend wird unter Bezugnahme auf die Fig. 10 bis 12 eine zweite Ausführungsform beschrieben. Im Vergleich mit der vorherigen Ausführungsform, auf deren Beschreibung hiermit explizit verwiesen wird, sind die Außenkörper 33, insbesondere direkt, beispielsweise innenseitig, an den Ständern 12 des Gestells 11 benachbart zu der Leimauftragseinrichtung 14 angeordnet bzw. gelagert. Die Außenkörper 33 befinden sich so zwischen dem jeweiligen Ständer 12 und der Leimauftragseinrichtung 14. Sie sind seitlich neben der ersten Riffelwalze 6 angeordnet. In eingefahrenem Zustand ist die Angreifstange 35 (im Wesentlichen) zwischen der ersten Riffelwalze 6 und der Leimauftragswalze 16 benachbart über dem Spalt 19 angeordnet. Sie befindet sich unterhalb der ersten Umlenkwalze 22 und ist beabstandet zu dem Anpressband 24 angeordnet (Fig. 10).

Bei einem Verlagern der Leimauftragseinrichtung 14 aus der aktiven Leimauftragsstellung in die inaktive Riffelwalzen-Wechselstellung bleibt die Anpressband-Angreifvorrichtung 31 unbeeinflusst.

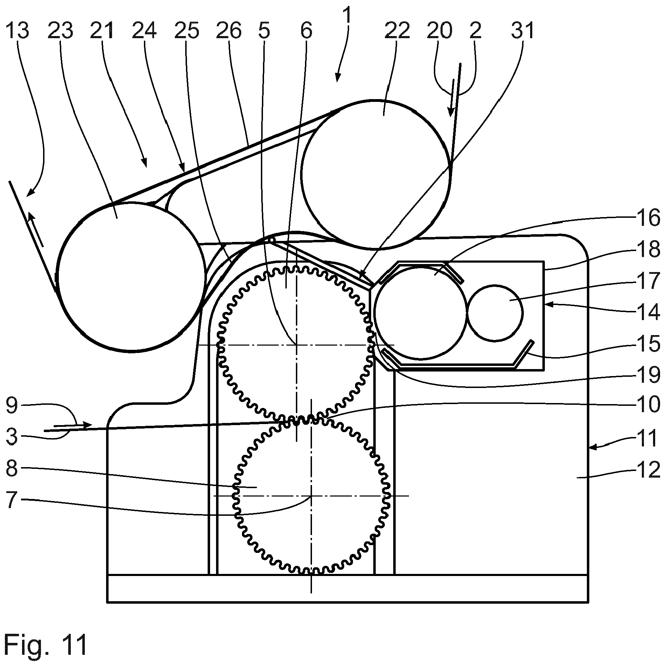

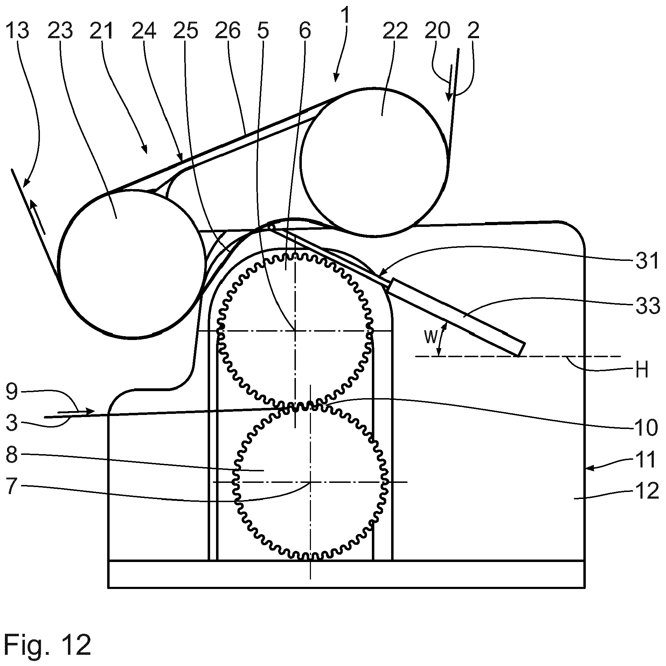

Beim Ausfahren der Verfahrkörper 34 (Fig. 11, 12) wird die Angreifstange 35 wieder über die erste Riffelwalze 6 und unter der ersten Umlenkwalze 22 zu dem Untergurt 25 zwischen den Umlenkwalzen 22, 23 verfahren. Die Angreifstange 35 wird nach schräg oben verfahren und greift dann dort wie bei der ersten Ausführungsform von unten außen an dem Untergurt 25 an. Sie drückt den Untergurt 25 nach oben bzw. hält ihn dort. Die Außenkörper 33 schließen beim Ausfahren der Angreifstange 35 gegenüber einer Horizontalen H einen Winkel w ein, der zwischen 10° und 40°, bevorzugt zwischen 15° und 35°, liegt und bevorzugt einstellbar ist.

Die Angreifstange 35 ist nach dem Riffelwalzenwechsel wieder entsprechend umgekehrt gleichmäßig einfahrbar.

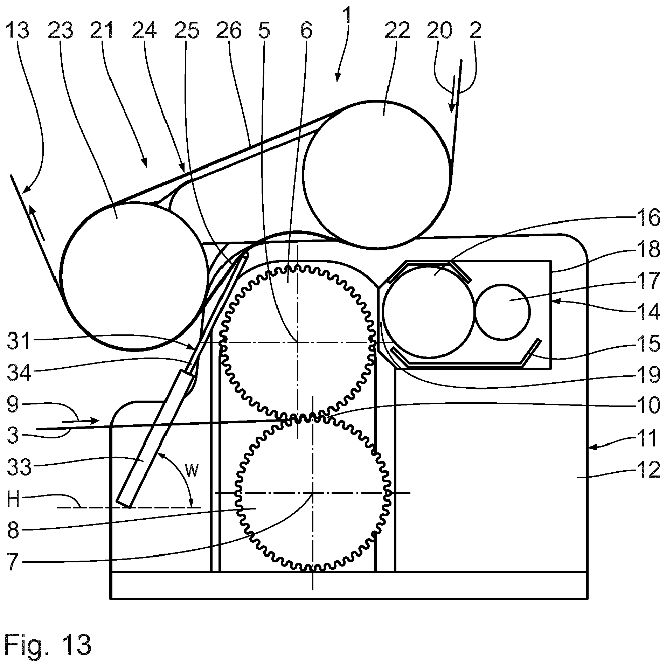

Nachfolgend wird unter Bezugnahme auf Fig. 13 eine dritte Ausführungsform beschrieben. Im Vergleich mit den beiden vorherigen Ausführungsformen, auf deren Beschreibung explizit verwiesen wird, sind die Außenkörper 33, insbesondere direkt, beispielsweise innenseitig, an den Ständern 12 des Gestells 11 auf Höhe der zweiten Riffelwalze 8 auf einer der Leimauftragseinrichtung 14 abgewandten Seite der zweiten Riffelwalze 8 angeordnet bzw. gelagert. Jeder Außenkörper 33 ist so (im Wesentlichen) unterhalb der zweiten Umlenkwalze 23 angeordnet.

Bei einem Verlagern der Leimauftragseinrichtung 14 aus der aktiven Leimauftragsstellung in die inaktive Riffelwalzen-Wechselstellung bleibt die Anpressband-Angreifvorrichtung 31 unbeeinflusst.

Bei einem Ausfahrvorgang wird die Angreifstange 35 unten an der zweiten Umlenkwalze 23 vorbeigeführt. Sie wird auch an der ersten Riffelwalze 6 vorbeigeführt. Sie wird nach schräg oben verfahren. Die Angreifstange 35 greift in ihrer Angreifstellung wie bei der ersten Ausführungsform von unten außen an dem Untergurt 25 des Anpressbandes 24 an und drückt diesen nach oben bzw. hält ihn dort. Jeder Außenkörper 33 schließt beim Ausfahren der Angreifstange 35 mit einer Horizontalen H einen Winkel w ein, der zwischen 50° und 80°, bevorzugt zwischen 55° und 75°, liegt und vorzugsweise einstellbar ist.

Die Angreifstange 35 ist nach dem Riffelwalzenwechsel wieder entsprechend umgekehrt gleichmäßig einfahrbar.

## Patentansprüche

1. Anordnung zur Herstellung einer einseitig kaschierten Wellpappebahn,
a) mit einer ersten Riffelwalze (6) und einer zweiten Riffelwalze (8) zum Erzeugen einer eine Wellung aufweisenden Wellbahn (4),
b) mit einer Leimauftragseinrichtung (14) zum Auftragen von Leim auf Spitzen der Wellung der Wellbahn (4),
c) mit einer Anpressbandvorrichtung (21), die aufweist i. ein Anpressband (24) zum Anpressen einer Deckbahn (2) an die mit Leim versehenen Spitzen der an der ersten Riffelwalze (6) bereichsweise anliegenden Wellbahn (4), und
d) mit einer Anpressband-Angreifvorrichtung (31), die aufweist
i. eine Anpressband-Angreifeinrichtung (35), die an dem Anpressband (24) bei einem Riffelwalzenwechsel zum Minimieren und/oder Ausschließen eines Hängens des Anpressbandes (24) zumindest benachbart zu der Anpressband-Angreifeinrichtung (35) nach unten angreift, und
ii. mindestens eine mit der Anpressband-Angreifeinrichtung (35) in Verbindung stehende Verlagerungseinrichtung (32) zum Verlagern der Anpressband-Angreifeinrichtung (35) zwischen einer Anpressband-Angreifstellung und einer Ruhestellung.

2. Anordnung nach Anspruch 1, **dadurch gekennzeichnet, dass** die mindestens eine Verlagerungseinrichtung (32) imstande ist, die Anpressband-Angreifeinrichtung (35) zwischen der Anpressband-Angreifstellung und Ruhestellung linear zu verlagern.

3. Anordnung nach Anspruch 1 oder 2, **dadurch gekennzeichnet, dass** die mindestens eine Verlagerungseinrichtung (32) als Linear-Verlagerungseinrichtung ausgebildet und bevorzugt in ihrer Länge veränderlich ist.

4. Anordnung nach einem der vorherigen Ansprüche, **dadurch gekennzeichnet, dass** die Anpressband-Angreifvorrichtung (31), insbesondere vollständig, außerhalb der Anpressbandvorrichtung (21) angeordnet ist.

5. Anordnung nach einem der vorherigen Ansprüche, **dadurch gekennzeichnet, dass** die Anpressband-Angreifeinrichtung (35) in ihrer Anpressband-Angreifstellung von unten an einem Untergurt (25) des Anpressbandes (24) angreift.

6. Anordnung nach einem der vorherigen Ansprüche, **dadurch gekennzeichnet, dass** bei einem Riffelwalzenwechsel zumindest die erste Riffelwalze (6) gegenüber einer aktiven Riffelstellung abgesenkt ist.

7. Anordnung nach einem der vorherigen Ansprüche, **dadurch gekennzeichnet, dass** zumindest eine Leimauftragswalze (16) der Leimauftragseinrichtung (14) gegenüber der ersten Riffelwalze (6) verlagerbar und bei einem Riffelwalzenwechsel gegenüber einer aktiven Leimauftragsstellung versetzt angeordnet ist.

8. Anordnung nach einem der vorherigen Ansprüche, **dadurch gekennzeichnet, dass** die Anpressband-Angreifvorrichtung (31) an der Leimauftragseinrichtung (14), insbesondere an einer Leimwanne (15) und/oder einem Leimauftragseinrichtungs-Gehäuse (18) derselben, angeordnet ist.

9. Anordnung nach einem der vorherigen Ansprüche, **dadurch gekennzeichnet, dass** die Anpressband-Angreifeinrichtung (35) bei Verlagerung zwischen der Anpressband-Angreifstellung und Ruhestellung eine Verlagerungstrajektorie beschreibt, die gegenüber einer Horizontalen (H) einen, vorzugsweise verstellbaren, Winkel (w) zwischen 2° und 20°, bevorzugt zwischen 4° und 10°, einschließt.

10. Anordnung nach einem der Ansprüche 1 bis 7, **gekennzeichnet durch** ein Anordnungsgestell (11), wobei die Anpressband-Angreifvorrichtung (31) an dem Anordnungsgestell (11) angeordnet ist.

11. Anordnung nach Anspruch 10, **dadurch gekennzeichnet, dass** die Anpressband-Angreifvorrichtung (31) benachbart zu der Leimauftragseinrichtung (14) an dem Anordnungsstell (11) angeordnet ist.

12. Anordnung nach Anspruch 11, **dadurch gekennzeichnet, dass** die Anpressband-Angreifvorrichtung (31) bei Verlagerung zwischen der Anpressband-Angreifstellung und Ruhestellung eine Verlagerungstrajektorie beschreibt, die gegenüber einer Horizontalen (H) einen, vorzugsweise verstellbaren, Winkel (w) zwischen 10° und 40°, bevorzugt zwischen 15° und 35°, einschließt.

13. Anordnung nach Anspruch 10, **dadurch gekennzeichnet, dass** die Anpressband-Angreifvorrichtung (31) auf Höhe der zweiten Riffelwalze (8) an dem Anordnungsgestell (11), und insbesondere auf einer der Leimauftragseinrichtung (14) abgewandten Seite der zweiten Riffelwalze (8) an dem Anordnungsgestell (11), angeordnet ist.

14. Anordnung nach Anspruch 13, **dadurch gekennzeichnet, dass** die Anpressband-Angreifvorrichtung (31) bei Verlagerung zwischen der Anpressband-Angreifstellung und Ruhestellung eine Verlagerungstrajektorie beschreibt, die gegenüber einer Horizontalen (H) einen, vorzugsweise verstellbaren, Winkel (w) zwischen 50° und 80°, bevorzugt zwischen 55° und 75°, einschließt.

15. Anordnung nach einem der vorherigen Ansprüche, **gekennzeichnet durch** eine Riffelwalzen-Wechselvorrichtung.
